# EUROPEAN PATENT APPLICATION

(11) **EP 4 656 325 A1**
(43) Date of publication of application: **03.12.2025**
(21) Application number: 23938573.5
(22) Date of filing: 01.12.2023
(51) Int. Cl.: B23K 26/066, B23K 26/382, G02B 5/32

(54) **INTERFERENCE LIGHT GENERATION METHOD AND INTERFERENCE LIGHT GENERATION DEVICE**

(30) Priority: 24.05.2023 JP 2023085124
(71) Applicant: Hamamatsu Photonics K.K., Hamamatsu-shi, Shizuoka 435-8558 (JP)
(72) Inventor: KURATA, Masateru, Hamamatsu-shi, Shizuoka 435-8558 (JP); KOBAYASHI, Satoru, Hamamatsu-shi, Shizuoka 435-8558 (JP); KAWAI, Kazuki, Hamamatsu-shi, Shizuoka 435-8558 (JP); SAKAI, Koichi, Hamamatsu-shi, Shizuoka 435-8558 (JP); KURITA, Takashi, Hamamatsu-shi, Shizuoka 435-8558 (JP); WATARI, Takeshi, Hamamatsu-shi, Shizuoka 435-8558 (JP); KINE, Yuta, Hamamatsu-shi, Shizuoka 435-8558 (JP)
(74) Representative: Grünecker Patent- und Rechtsanwälte PartG mbB
(86) International application number: PCT/JP2023/043167
(87) International publication number: WO 2024/241611

(57) **Abstract**

An interference light generation method involves placing a base material 15 in an optical path of a first laser beam LA, manufacturing a filter 6 by irradiating the base material 15 with a plurality of first light fluxes L1 obtained by splitting the first laser beam LA to form a plurality of openings P corresponding to irradiation positions of the plurality of first light fluxes L1 in the base material 15, and generating interference light Ls by splitting a second laser beam LB into a plurality of second light fluxes L2 having the same optical axis as the plurality of first light fluxes L1 while each of the plurality of openings P of the filter 6 is maintained on the optical axis of the plurality of first light fluxes L1 corresponding to the plurality of openings P, and causing the plurality of second light fluxes L2 having passed through each of the plurality of openings P to interfere with each other.

## Description

### Technical Field

The present disclosure relates to an interference light generation method and an interference light generation device.

### Background Art

For example, in the field of laser processing of performing micromachining on the surface or inside of an object, an interference light generation technique for enabling simultaneous multipoint processing has been attracting attention. In such an interference light generation technique, for example, interference light having a desired pattern (periodic two-dimensional intensity distribution) is generated by splitting a laser beam into a plurality of light fluxes and causing the plurality of light fluxes to interfere with each other.

An example of the interference light generation technique is a patterned interference light generation device disclosed in Patent Literature 1. This patterned interference light generation device includes a laser light source, a wavefront control unit that controls the wavefront of a laser beam by presenting a hologram pattern, an imaging optical system that images wavefront control light at a target position, a filter disposed in a focusing portion of the imaging optical system, and a control unit that controls the hologram pattern so that a plurality of bright spots of a desired order are generated in the focusing portion of the imaging optical system. The filter has a plurality of elongated slits formed therein, which extend radially toward the plurality of bright spots of a desired order. This makes it possible to change the periodic two-dimensional intensity distribution of the interference light without replacing the filter, insofar as the positions of the bright spots are within a range in which they pass through the elongated slits.

### Citation List

### Patent Literature

[Patent Literature 1] Japanese Unexamined Patent Publication No. 2014-124645

### Summary of Invention

### Technical Problem

In the interference light generation technique as described above, the shape and position of an opening formed in the filter are very important. In a case where the shape and position of the opening are not appropriate for the beam diameter of the laser beam incident on the opening, the pattern of the interference light to be obtained may deviate from a desired pattern because the light to be passed through is cut off by the opening, or the light to be cut passes through the opening, which may inhibit the degree of freedom in the design of the pattern. In addition, in a case where the pattern of the interference light to be obtained is changed, it is necessary to prepare a filter having an opening with a different shape and position in accordance with a change in the beam diameter of the laser beam or the like. For this reason, alignment with a high level of accuracy is required each time so that the laser beam passes through the opening appropriately.

The present disclosure was contrived to solve the above problems, and an object thereof is to provide an interference light generation method and an interference light generation device that make it possible to form a desired pattern of interference light accurately and with a high degree of freedom, and to eliminate the need for precise alignment between the laser beam and the opening.

### Solution to Problem

According to an aspect of the present disclosure, there is provided an interference light generation method including: a placement step of placing a base material for filter formation in an optical path of a first laser beam; a manufacturing step of manufacturing a filter by splitting the first laser beam into a plurality of first light fluxes and irradiating the base material with the plurality of first light fluxes to form a plurality of openings corresponding to irradiation positions of the plurality of first light fluxes in the base material; and a generation step of generating interference light by splitting a second laser beam into a plurality of second light fluxes having the same optical axis as the plurality of first light fluxes while each of the plurality of openings of the filter is maintained on the optical axis of the plurality of first light fluxes corresponding to the plurality of openings, and causing the plurality of second light fluxes having passed through each of the plurality of openings to interfere with each other.

In this interference light generation method, a filter is manufactured by splitting the first laser beam into a plurality of first light fluxes and irradiating the base material with these first light fluxes to form a plurality of openings. This allows the plurality of openings to be formed in the base material using a single optical system for the first laser beam, which makes it possible to form a desired pattern of interference light accurately and with a high degree of freedom. In addition, in this interference light generation method, interference light is generated by splitting a second laser beam into a plurality of second light fluxes having the same optical axis as the plurality of first light fluxes, and causing the plurality of second light fluxes having passed through each of the plurality of openings to interfere with each other. That is, in this method, when interference light is generated, a filter for generating interference light is manufactured on the spot, and after the filter is manufactured, the plurality of second light fluxes can be passed directly through the plurality of openings. Therefore, even in a case where the pattern of interference light to be generated is changed, precise alignment between the laser beam and opening is not required.

The manufacturing step may include using a hologram pattern presented by a spatial light modulator to split the first laser beam into the plurality of first light fluxes and to split the second laser beam into the plurality of second light fluxes. In this case, the hologram pattern presented by the spatial light modulator can be used to easily generate the first light flux and the second light flux according to a desired pattern of interference light (control the wavefronts of the first laser beam and the second laser beam).

The manufacturing step may include superimposing a phase pattern for enlarging a size of the plurality of openings on the hologram pattern. This makes it possible to easily form an opening of an appropriate size that does not cause interference with the second light flux in the generation step.

The method may further include a determination step of calculating bright spot positions of n-th-order diffracted light and (n+1)-th-order diffracted light of the plurality of first light fluxes on the base material on the basis of the hologram pattern, and determining a size of an opening corresponding to the n-th-order diffracted light so as to reach any position between the bright spot positions of the n-th-order diffracted light and the (n+1)-th-order diffracted light. This makes it possible to appropriately determine the size of the opening corresponding to the n-th-order diffracted light.

The method may further include a determination step of calculating bright spot positions and intensities of n-th-order diffracted light and (n+1)-th-order diffracted light of the plurality of first light fluxes on the base material on the basis of the hologram pattern, and determining a size of an opening corresponding to the n-th-order diffracted light so that a ratio of a distance from the bright spot position of the n-th-order diffracted light to an edge of the opening to a distance from the edge of the opening to the bright spot position of the (n+1)-th-order diffracted light is a ratio of the intensity of the n-th-order diffracted light to the intensity of the (n+1)-th-order diffracted light. This makes it possible to appropriately determine the size of the opening corresponding to the n-th-order diffracted light.

The method may further include a calculation step of calculating an intensity of the first laser beam required to form the plurality of openings in the base material. In this case, the opening can be formed by the first light flux with an appropriate intensity.

An intensity of the first laser beam in the manufacturing step may be greater than an intensity of the second laser beam in the generation step. This makes it possible to prevent the second light flux from interfering with the opening when the interference light is generated.

The manufacturing step may include forming the plurality of openings using only the plurality of first light fluxes. In this case, only the first light flux contributes to the formation of the opening, so that when the interference light is generated, excess light fluxes that do not contribute to the generation of the interference light can be prevented from passing through the opening.

The manufacturing step may include forming each of the plurality of openings to have a circular cross-section. In this case, noise in the generated interference light can be reduced more than in a case where each of the plurality of openings has another shape such as a rectangular shape.

The method may further include: a discrimination step of determining whether an amount of deviation of a size of the plurality of openings manufactured in the manufacturing step from a set value exceeds a threshold; and a re-adjustment step of re-adjusting the size of the plurality of openings in a case where it is determined in the discrimination step that the amount of deviation of the size of the plurality of openings from the set value exceeds the threshold. In this case, the size of the opening is appropriately re-adjusted, so that a desired pattern of interference light can be formed with high precision.

The manufacturing step may include using a hologram pattern presented by a spatial light modulator to split the first laser beam into the plurality of first light fluxes and to split the second laser beam into the plurality of second light fluxes, and the re-adjustment step may include changing the hologram pattern and then re-irradiating the base material with the plurality of first light fluxes. In this case, the re-adjustment of the size of the opening does not require movement of the base material or the like, and thus the size of the opening can be easily re-adjusted.

The re-adjustment step may include changing a position of the base material along the optical axis of the plurality of first light fluxes, and then re-irradiating the base material with the plurality of first light fluxes. In this case, the size of the opening can be easily re-adjusted in a short time.

The placement step may include feeding out one region of a long base material onto the optical axis of the plurality of first light fluxes. According to such a method, by shifting the placement region of the long base material with respect to the optical axis of the first light flux, it is possible to place a new region (a region without an opening) of the base material with respect to the plurality of first light fluxes without changing the position of the base material relative to the optical axis direction of the laser beam. Therefore, when the pattern of the interference light is changed, the filter can be easily generated on the spot.

The method may further include a processing step of irradiating an object with the interference light generated in the generation step to process the object. In this case, the object can be suitably processed using interference light having a high-accuracy pattern.

According to an aspect of the present disclosure, there is provided an interference light generation device including: a light source configured to output a first laser beam and a second laser beam; a base material for filter formation placed in an optical path of the first laser beam; a light splitting unit configured to split the first laser beam into a plurality of first light fluxes and to split the second laser beam into a plurality of second light fluxes; and a control unit configured to control an operation of the light source, wherein the control unit manufactures a filter by irradiating the base material with the plurality of first light fluxes to form a plurality of openings corresponding to irradiation positions of the plurality of first light fluxes in the base material, and generates interference light by splitting the second laser beam into the plurality of second light fluxes having the same optical axis as the plurality of first light fluxes while each of the plurality of openings of the filter is maintained on the optical axis of the plurality of first light fluxes corresponding to the plurality of openings, and causing the plurality of second light fluxes having passed through each of the plurality of openings to interfere with each other.

In this interference light generation device, a filter is manufactured by splitting the first laser beam into a plurality of first light fluxes and irradiating the base material with these first light fluxes to form a plurality of openings. This allows the plurality of openings to be formed in the base material using a single optical system for the first laser beam, which makes it possible to form a desired pattern of interference light accurately and with a high degree of freedom. In addition, in this interference light generation device, interference light is generated by splitting the second laser beam into a plurality of second light fluxes having the same optical axis as the plurality of first light fluxes, and causing the plurality of second light fluxes having passed through each of the plurality of openings to interfere with each other. That is, in this device, when interference light is generated, a filter for generating interference light is manufactured on the spot, and after the filter is manufactured, the plurality of second light fluxes can be passed directly through the plurality of openings. Therefore, even in a case where the pattern of interference light to be generated is changed, precise alignment between the laser beam and opening is not required.

### Advantageous Effects of Invention

According to the present disclosure, a desired pattern of interference light can be formed accurately and with a high degree of freedom, and thus precise alignment between the laser beam and the opening is not required.

### Brief Description of Drawings

FIG. 1 is a schematic diagram illustrating an interference light generation device according to an embodiment of the present disclosure.
FIG. 2(a) is a diagram illustrating an example of a hologram pattern presented by a spatial light modulator which is a light splitting unit, FIG. 2(b) is a diagram illustrating a plurality of bright spots at a focusing position, and FIG. 2(c) is a diagram illustrating interference light generated at a target position.
FIG. 3(a) is a diagram illustrating another example of a hologram pattern presented by the spatial light modulator which is a light splitting unit, FIG. 3(b) is a diagram illustrating a plurality of bright spots at a focusing position, and FIG. 3(c) is a diagram illustrating interference light generated at a target position.
FIG. 4 is a diagram illustrating a relationship between the size of an opening in a filter and the pattern of interference light.
FIG. 5(a) is a diagram illustrating a beam cross section of a flat-top-type laser beam, and FIG. 5(b) is a diagram illustrating a beam cross section of a Gaussian-type laser beam.
FIG. 6 is a flowchart illustrating an interference light generation method according to an embodiment of the present disclosure.
FIG. 7(a) is a schematic diagram illustrating an example of determining the size of an opening for n-th-order diffracted light, and FIG. 7(b) is a schematic diagram illustrating another example of determining the size of an opening for the n-th-order diffracted light.
FIG. 8 is a schematic diagram illustrating a placement step.
FIG. 9 is a schematic diagram illustrating a manufacturing step.
FIG. 10(a) is a diagram illustrating an example of the pattern of interference light in a case where an opening having an elliptical cross section is used, and FIG. 10(b) is a diagram illustrating an example of the pattern of interference light in a case where an opening having a circular cross section is used.

### Description of Embodiments

Hereinafter, preferred embodiments of an interference light generation method and an interference light generation device according to an aspect of the present disclosure will be described in detail with reference the accompanying drawings.

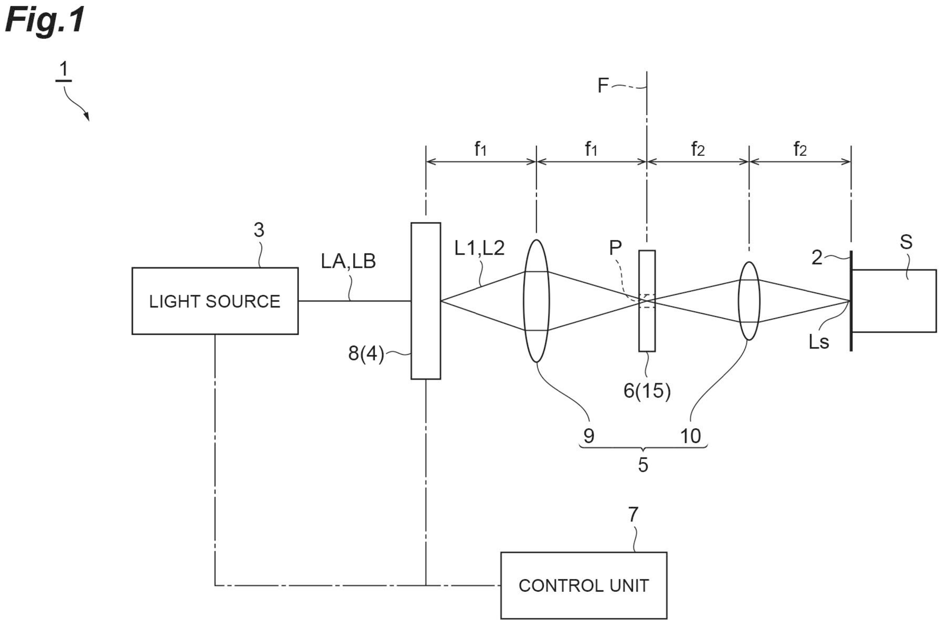

FIG. 1 is a schematic diagram illustrating an interference light generation device according to an embodiment of the present disclosure. An interference light generation device 1 shown in FIG. 1 is configured as a device that generates interference light having a desired pattern (periodic two-dimensional intensity distribution) at a target position 2. In the present embodiment, an object S is placed at the target position 2, and simultaneous multipoint processing on the surface of the object S by interference light Ls can be performed. As shown in FIG. 1, the interference light generation device 1 includes a light source 3, a light splitting unit 4, an imaging optical system 5, a filter 6 (a base material 15 to be described later), and a control unit 7.

The light source 3 is a device that outputs a first laser beam LA and a second laser beam LB toward the target position 2. The light source 3 is a light source that both outputs a first light flux L1 to be described later and outputs a second light flux L2, and switches between outputting either the first laser beam LA or the second laser beam LB on the basis of a control signal from the control unit 7. As the light source 3, for example, a pulsed laser light source having a pulse width of several hundred picoseconds to several femtoseconds can be used. The first laser beam LA and the second laser beam LB output from the light source 3 are input to the light splitting unit 4 directly or through a predetermined optical system. The light source 3 may have a single laser light source capable of controlling the wavelength, and may change the wavelength between when the first laser beam LA is output and when the second laser beam LB is output. In addition, the light source 3 may have, for example, a plurality of laser light sources that output laser beams of wavelengths different from each other, and may be configured to switch the optical paths of laser beams from the plurality of laser light sources using a mirror or the like between the output of the first laser beam LA and the output of the second laser beam LB.

The light splitting unit 4 is a unit that splits the first laser beam LA into a plurality of first light fluxes L1 and splits the second laser beam LB into a plurality of second light fluxes L2. The first light flux L1 is a light flux for filter formation, which is used for processing the base material 15 to form the filter 6. The second light flux L2 is a light flux for interference light formation at the target position 2 and is a light flux used for processing the surface of the object S. The first light flux L1 and the second light flux L2 will be described in detail later.

As the light splitting unit 4, for example, a phase modulation-type spatial light modulator (SLM), a deformable mirror, or the like can be used to dynamically control the wavefronts of the first laser beam LA and the second laser beam LB. In addition, as the light splitting unit 4, a diffractive optical element (DOE) or the like can be used to statically control the wavefronts of the first laser beam LA and the second laser beam LB. The spatial light modulator, the deformable mirror, and the diffractive optical element may be of either a transmissive type or a reflective type. The spatial light modulator may be any of a liquid crystal display (LCD) type, a liquid crystal on silicon (LCOS) type, a micro electron mechanical systems (MEMS) type, an optically addressed type, and a magneto-optical type. In the present embodiment, as the light splitting unit 4, a transmission-type and LCOS-type spatial light modulator 8 is used.

The spatial light modulator 8 presents a hologram pattern for controlling the wavefront (phase) of the laser beam L at a plurality of pixels arranged two-dimensionally with respect to the input first laser beam LA and second laser beam LB, and controls the wavefront of the laser beam L. The hologram pattern is preferably a hologram obtained by numerical calculation (CGH: Computer Generated Hologram). The wavefront control light (here, the plurality of first light fluxes L1 or the plurality of second light fluxes L2) output from the spatial light modulator 8 is input to the imaging optical system 5.

The imaging optical system 5 is an optical system that images the wavefront control light which is output from the spatial light modulator 8 at the target position 2. The imaging optical system 5 has, for example, a pair of lenses 9 and 10. In the present embodiment, the imaging optical system 5 is a reduced optical system. The lens 9 is disposed so that its input-side focal point (focal length f1) is located on the output surface of the spatial light modulator 8. The lens 10 is disposed so that its input-side focal point (focal length f2) is located at the output-side focal point (focal length f1) of the lens 9 and its output-side focal point (focal length f2) is located at the target position 2. With this arrangement, the lens 9 performs a Fourier transform, and the lens 10 performs an inverse Fourier transform.

The filter 6 is a portion that allows passage of only bright spots of a predetermined order out of the second laser beam LB which is a light flux for interference light formation. The filter 6 is disposed between the lenses 9 and 10 at the focusing position F of the imaging optical system 5, that is, at the output-side focal point (Fourier plane) of the lens 9 and the input-side focal point of the lens 10. The filter 6 has a plurality of openings P that allow passage of only bright spots of a desired order at the output-side focal point of the lens 9. The cross-sectional shape of opening P can take various shapes such as a circle, an ellipse, or a polygon, but here, it is formed to have a circular cross-section. In the present embodiment, the filter 6 allows passage of only +1st-order diffracted light as a bright spot of a desired order from the opening P, and cuts off bright spots other than the +1 st-order diffracted light.

The control unit 7 is a unit that controls the operations of the light source 3 and the light splitting unit 4. Physically, it is configured to include, for example, a processor such as a CPU, and storage media such as a RAM and a ROM. The control unit 7 may be a smartphone or a tablet terminal which is integrally equipped with a display unit and an input unit. The computer may be configured with a microcomputer, a field-programmable gate array (FPGA), or the like.

In the present embodiment, the control unit 7 outputs an indication signal for indicating the output conditions (intensity, repetition frequency, and the like) of the first laser beam LA and the second laser beam LB which are output from the light source 3. In addition, the control unit 7 sets the amount of wavefront control (the amount of phase modulation) in the spatial light modulator 8 constituting the light splitting unit 4, outputs a setting signal for the amount of wavefront control for each pixel, and controls the hologram pattern presented by the spatial light modulator 8. Meanwhile, in a case where the light splitting unit 4 is configured with a diffractive optical element, the necessary fine pattern is formed in advance on the diffractive optical element, and thus control of the light splitting unit 4 by the control unit 7 is not required.

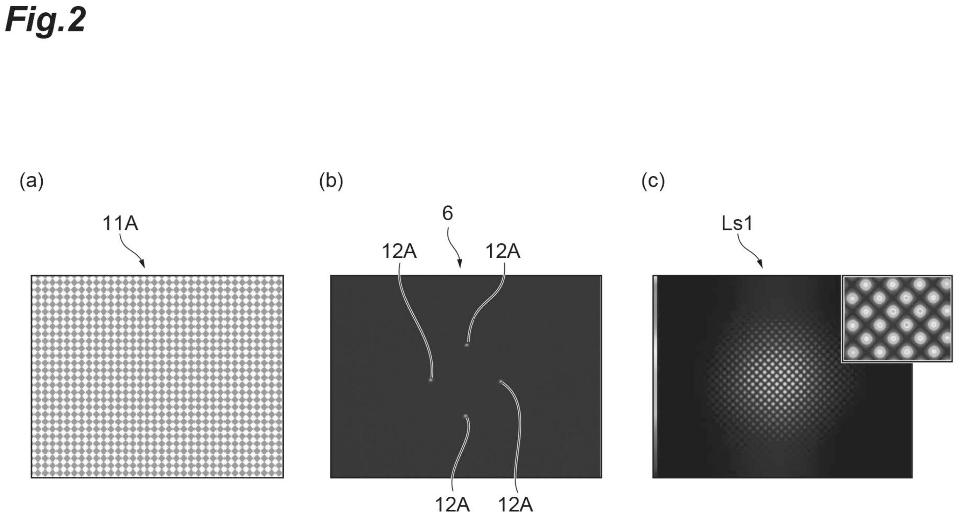

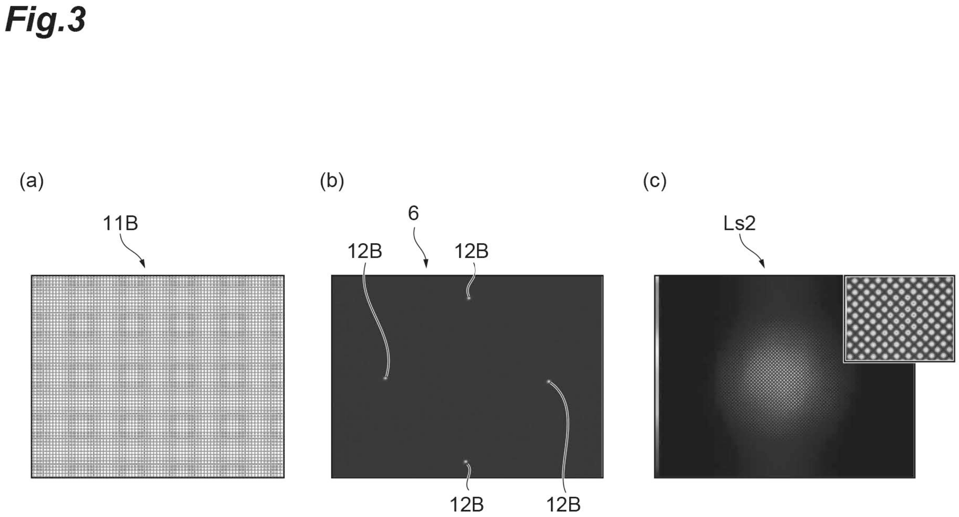

The interference light generation device 1 as described above, for example, by presenting hologram patterns 11A and 11B as shown in FIGS. 2(a) and 3(a), +1st-order diffracted lights 12A and 12B as shown in FIGS. 2(b) and 3(b) are generated at the focusing position F (position of the filter 6) of the imaging optical system 5. The zeroth-order light and higher-order diffracted light are cut by the filter 6, and the +1st-order diffracted light 12 having passed through the opening P undergoes an inverse Fourier transform by the lens 10, whereby the interference lights Ls1 and Ls2 as shown in FIGS. 2(c) and 3(c) are generated at the target position 2.

The four +1st-order diffracted lights 12A in FIG. 2(b) which are formed by the hologram pattern 11A in FIG. 2(a) are spaced closer to the center than the four +1st-order diffracted lights 12B in FIG. 3(b) which are formed by the hologram pattern 11A in FIG. 3(a). As shown in FIGS. 2(c) and 3(c), it can be understood that when the spacing between the four +1st-order diffracted lights 12A and 12B relative to the center is narrowed, the periodic spacing of the periodic two-dimensional intensity distribution of the interference lights Ls1 and Ls2 at the target position 2 is widened. In this way, in the interference light generation device 1, the interference light Ls having a periodic two-dimensional intensity distribution of various patterns can be generated at the target position 2 by controlling the hologram pattern presented to the second laser beam LB which is a light flux for interference light formation.

In the interference light generation device 1, the shape and position of the opening P formed in the filter 6 are very important. For example, in case where the shape and position of the opening P are not appropriate for the beam diameter of the laser beam (second light flux L2) incident on the opening P, the pattern of the interference light Ls to be obtained may deviate from a desired pattern because the light to be passed through is cut off by the opening P, or the light to be cut passes through the opening P, which may inhibit the degree of freedom in the design of the pattern.

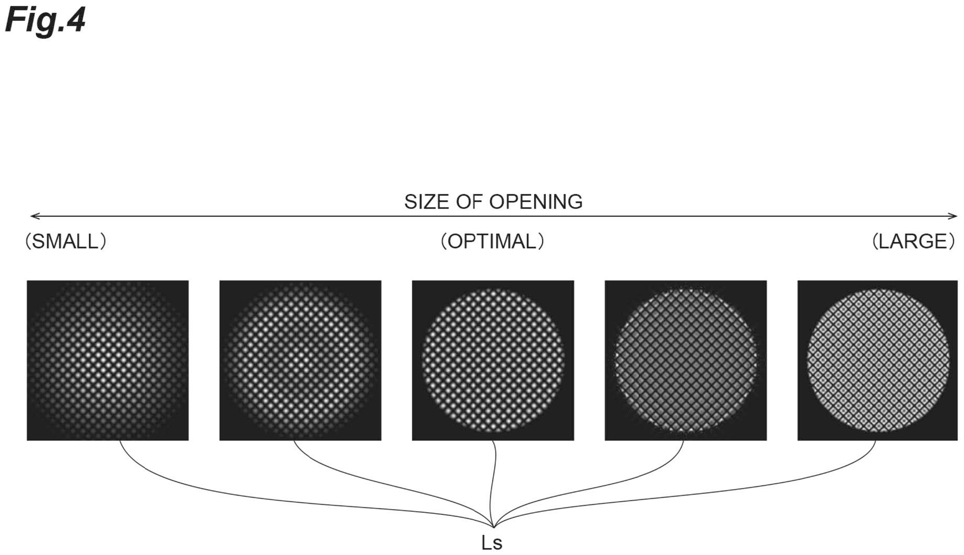

FIG. 4 is a diagram illustrating a relationship between the size of an opening in a filter and the pattern of interference light. In the drawing, a case where a laser beam having a uniform intensity distribution within a beam is used is illustrated. As shown in FIG. 4, in a case where the size of the opening P is optimal with respect to the beam diameter of the laser beam, the interference light Ls having a two-dimensional intensity distribution of a uniform periodic structure as shown in the center of FIG. 4 can be generated. On the other hand, when the size of the opening is insufficient with respect to the beam diameter of the laser beam, intended interference may not be realized as shown in the two left examples in FIG. 4, and the uniformity of the periodic structure of the interference light Ls may be lost. In addition, when the size of the opening P is excessive with respect to the beam diameter of the laser beam, unintended interference may be applied as shown in the two right examples in FIG. 4, resulting in the generation of the interference light Ls having a different two-dimensional intensity distribution.

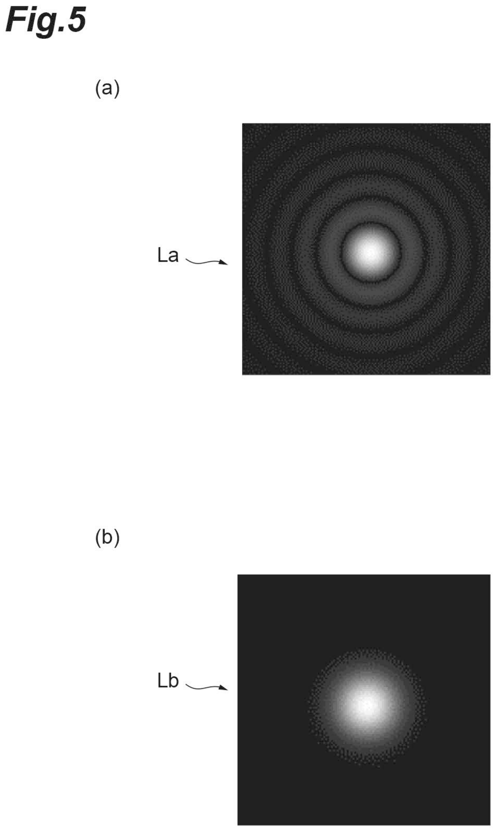

A laser beam used to generate the interference light Ls may have a flat-top-type beam cross section. In a case where the laser beam La having a flat-top-type beam cross section is focused, side lobes may appear around the bright spot at the focusing position F, for example, as shown in FIG. 5(a). Which of the multiple side lobes is used depends on the desired pattern of the interference light Ls, such as when the side lobes of the n-th-order diffracted light and the (n+1)-th-order diffracted light overlap each other. However, when the shape or position of the opening P is not appropriate and the side lobe are cut off by the filter 6, it will be approximately equivalent to a laser beam Lb having a Gaussian-type beam cross section as shown in FIG. 5(b), and thus there is concern that the pattern of the interference light Ls will be deviate from the desired pattern.

In addition, in a case where the pattern of the interference light Ls to be obtained is changed, it is necessary to prepare a filter 6 having an opening P with a different shape and position in accordance with a change in the beam diameter of the laser beam or the like. For this reason, when the filter 6 is replaced, alignment with a high level of accuracy is required each time so that the laser beam passes through the opening P appropriately.

To address such problems, in the interference light generation device 1, when the interference light Ls is generated, the base material 15 is irradiated with a plurality of first light fluxes L1 to form an opening P, thereby manufacturing the filter 6 for generating interference light on the spot, and a plurality of second light fluxes L2 are passed directly through the opening P of the manufactured filter 6 to be used to generate the interference light Ls, which leads to the elimination of the need for precise alignment of the laser beam (second light flux L2) and the opening P, and an improvement in the accuracy of the desired pattern of the interference light Ls.

Hereinafter, an operation of the interference light generation device 1 and an interference light generation method according to an embodiment of the present disclosure will be described in detail.

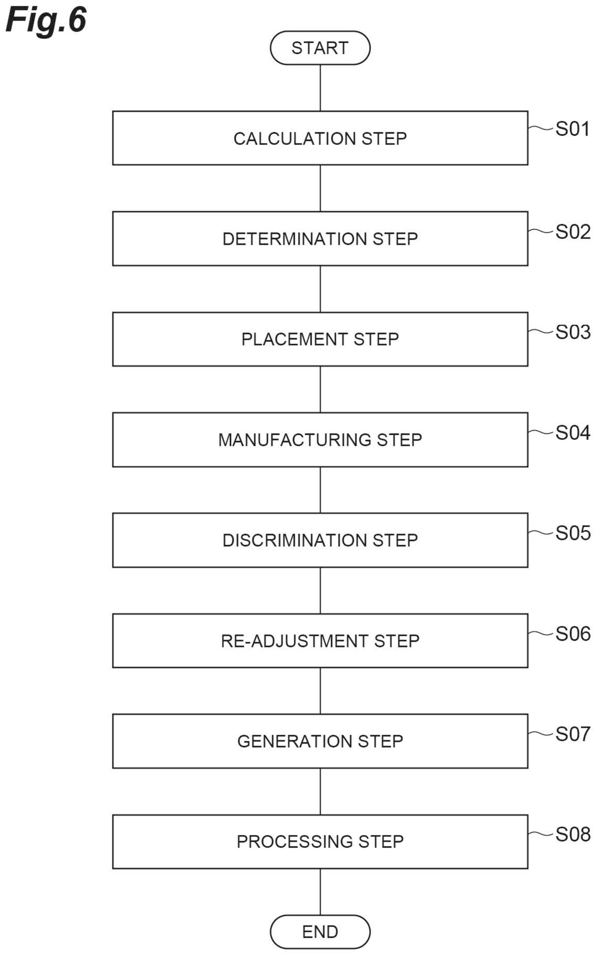

FIG. 6 is a flowchart illustrating an interference light generation method according to an embodiment of the present disclosure. As shown in the drawing, the interference light generation method according to the present embodiment is configured to include a calculation step (step S01), a determination step (step S02), a placement step (step S03), a manufacturing step (step S04), a discrimination step (step S05), a re-adjustment step (step S06), and a generation step (step S07).

The calculation step S01 is a step of calculating the intensity of the first laser beam LA required to form a plurality of openings P in the base material 15. In the calculation step S01, for example, the control unit 7 calculates the intensity of the first laser beam LA (first light flux L1) used in the manufacturing step S04 on the basis of the material, thickness, or the like of the base material 15 used to form the filter 6. Here, the intensity of the first laser beam LA (first light flux L1) in the manufacturing step S04 is set to be greater than the intensity of the second laser beam LB (second light flux L2) in the generation step S07. The control unit 7 generates an indication signal based on the calculation result and outputs the indication signal to the light source 3 to control the intensity of the first laser beam LA from the light source 3.

The determination step S02 is a step of determining the size of the opening P to be formed in the base material 15. In the determination step S02, for example, the control unit 7 determines the size of the opening P corresponding to the n-th-order diffracted light of the first laser beam LA. The control unit 7 generates an indication signal on the basis of the determined size of the opening P and outputs the indication signal to the light splitting unit 4 to control the hologram pattern presented by the spatial light modulator 8.

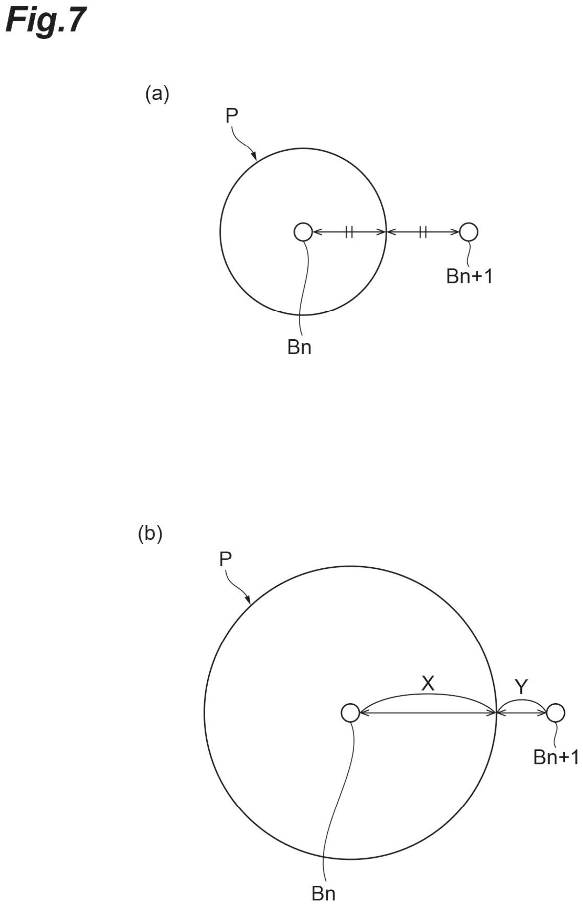

In determining the size of the opening P, for example, as shown in FIG. 7(a), the bright spot position Bₙ of the n-th-order diffracted light and the bright spot position Bₙ₊₁ of the (n+1)-th-order diffracted light of the plurality of first light fluxes L1 on the base material 15 may be calculated on the basis of the hologram pattern, and the size of the opening P corresponding to the n-th-order diffracted light may be determined so as to reach any position between the bright spot positions Bₙ and Bₙ₊₁ of the n-th-order diffracted light and the (n+1)-th-order diffracted light. In the example of FIG. 7(a), the radius of the opening P having a circular cross section corresponding to the n-th-order diffracted light is determined so as to reach the position of the midpoint between the bright spot positions Bₙ and Bₙ₊₁ of the n-th-order diffracted light and the (n+1)-th-order diffracted light.

In addition, for example, as shown in FIG. 7(b), the bright spot position Bₙ and intensity of the n-th-order diffracted light and the bright spot position Bₙ₊₁ and intensity of the (n+1)-th-order diffracted light of the plurality of first light fluxes L1 on the base material 15 may be calculated on the basis of the hologram pattern, and the size of the opening P corresponding to the n-th-order diffracted light may be determined so that the ratio of the distance from the bright spot position Bₙ of the n-th-order diffracted light to the edge of the opening P to the distance from the edge of the opening P to the bright spot position Bₙ₊₁ of the (n+1)-th-order diffracted light is the ratio of the intensity of the n-th-order diffracted light to the intensity of the (n+1)-th-order diffracted light.

That is, in a case where the ratio of the intensity of the n-th-order diffracted light to the intensity of the (n+1)-th-order diffracted light is X:Y, the size of the opening P corresponding to the n-th-order diffracted light is determined so that the ratio of the distance from the bright spot position Bₙ of the n-th-order diffracted light to the edge of the opening P to the distance from the edge of the opening P to the bright spot position Bₙ₊₁ of the (n+1)-th-order diffracted light is X:Y. In the example of FIG. 7(b), in a case where the ratio of the intensity of the n-th-order diffracted light to the intensity of the (n+1)-th-order diffracted light is 7:3, and the distance between the bright spot positions Bₙ and Bₙ₊₁ of the n-th-order diffracted light and the (n+1)-th-order diffracted light is set to 1, the radius of the opening P having a circular cross section corresponding to the n-th-order diffracted light is determined so that the edge of the opening P reaches a position corresponding to 7/10 of that distance.

Meanwhile, the calculation step S01 and the determination step S02 described above may be performed in any order, or may be performed simultaneously.

The placement step S03 is a step of placing the base material 15 for filter formation in the optical path of the first laser beam LA. The base material 15 is composed of, for example, a metal plate or a resin plate. Examples of the metal material include stainless steel (SUS), aluminum, and the like. Examples of the resin material include ultraviolet-curable acrylic resin, silicone rubber, and the like. From the viewpoint of low thermal conductivity and enabling accurate formation of the opening P using the first laser beam LA, it is preferable to configure the base material 15 with a metal plate made of stainless steel.

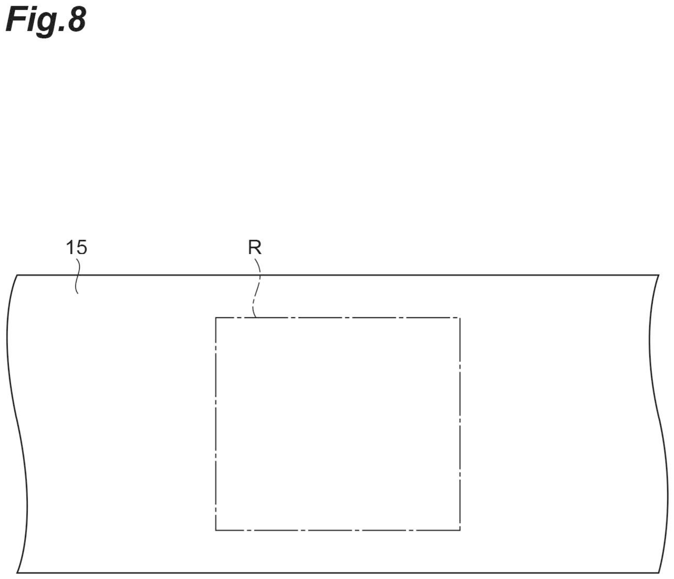

In the present embodiment, as shown in FIG. 8, a long base material 15 is prepared, and the long base material 15 is fed to the optical axis of the first laser beam LA, so that one region R of the base material 15 is located at the focusing position F of the imaging optical system 5. The long base material 15 may be prepared, for example, in the form of a roll, and the base material 15 may be transported between a feeding roller and a take-up roller so as to straddle the optical axis of the first laser beam LA. By adopting such a configuration, when the pattern of the interference light Ls is changed, it is possible to remove one region R of the base material 15 having the opening P formed therein from the focusing position F of the imaging optical system 5 by winding up the long base material 15, and to locate a new region R at the focusing position F of the imaging optical system 5.

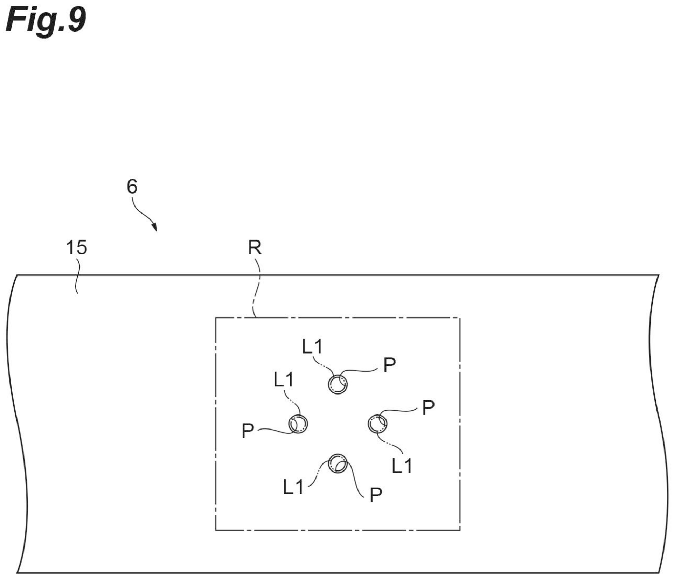

The manufacturing step S04 is a step of manufacturing the filter 6 by forming a plurality of openings P in the base material 15. In the manufacturing step S03, the control unit 7 controls the light source 3 on the basis of the intensity calculated in the calculation step S01, and outputs the first laser beam LA from the light source 3. In addition, the control unit 7 controls the light splitting unit 4 on the basis of the size of the opening P determined in the determination step S02, and presents a hologram pattern from the spatial light modulator 8. By controlling the wavefront of the first laser beam LA using the hologram pattern, the first laser beam LA output from the light source 3 is split into a plurality of first light fluxes L1. As shown in FIG. 9, the filter 6 is manufactured by irradiating one region R of the long base material 15 with the plurality of first light fluxes L1 to form a plurality of openings P corresponding to the irradiation positions of the plurality of first light fluxes L1 in the one region R. Meanwhile, upon the irradiation with the plurality of first light fluxes L1, a dust collector that collects debris scattered during processing of the base material 15 may be disposed in the vicinity of the base material 15.

In the manufacturing step S04, typically, only the plurality of first light fluxes L1 are used, and a plurality of openings P corresponding to the focusing diameters of the plurality of first light fluxes L1 are formed in one region R of the base material 15. On the other hand, by moving the base material 15 back and forth in the optical axis direction of the plurality of first light fluxes L1 from the focusing position F, a plurality of openings P having a size slightly greater than the focusing diameter of the plurality of first light fluxes L1 may be formed in one region R of the base material 15. In this case, instead of moving the base material 15 back and forth, a phase pattern for enlarging the size of the plurality of openings P may be superimposed on the hologram pattern. Examples of such a phase pattern include a tilt component, a defocus component, and the like. By superimposing such a phase pattern on the hologram pattern, the size of the plurality of openings P formed in the base material 15 by the first light flux L1 becomes slightly greater than the beam diameter in the first light flux L1, and thus it is possible to prevent the second light flux L2 from interfering with the edges of the openings P in the generation step S07 to be described later.

For example, in a case where a tilt component is superimposed on the first light flux L1, the beam intensity of the first light flux L1 near the focusing position F increases, and thus the size of the plurality of openings P formed in the base material 15 by the first light flux L1 can be made slightly greater than the beam diameter in the first light flux L1. In addition, for example, in a case where a defocus component is superimposed on the first light flux L1, the beam position of the first light flux L1 at the focusing position F can be shifted. Therefore, by performing irradiation over multiple times while shifting the beam position, the size of the plurality of openings P formed in the base material 15 by the first light flux L1 can be made slightly greater than the beam diameter in the first light flux L1.

The size of the plurality of openings P may be as large as possible within a range in which the n-th-order diffracted light passes through and the (n+1)-th-order diffracted light does not pass through. By increasing the size of the plurality of openings P, even in a case where vibration is applied to the imaging optical system 5, it is possible to prevent the second light flux L2 from interfering with the edges of the openings P in the generation step S07 to be described later. In addition, it is also possible to increase the efficiency of using the n-th-order diffracted light.

The discrimination step S05 is a step of determining whether the amount of deviation of the size of the plurality of openings P from the set value exceeds a threshold for the filter 6 manufactured in the manufacturing step S04. Information indicating the discrimination result in the discrimination step S05 is input to, for example, the control unit 7. Various methods can be applied to the evaluation of the size of the plurality of openings P. For example, the evaluation may be performed on the basis of the pattern of the interference light Ls generated at the target position 2 by the plurality of first light fluxes L1 or the plurality of second light fluxes L2 that have passed through the plurality of openings P. In a case where the plurality of first light fluxes L1 include the tilt component and the defocus component described above relative to the plurality of second light fluxes L2, it may be difficult to generate a pattern of the interference light Ls for evaluation. However, in a case where the plurality of first light fluxes L1 differing only in intensity relative to the plurality of second light fluxes L2 are used, such a pattern of the interference light Ls for evaluation can be suitably generated.

In addition, when evaluating the size of the plurality of openings P, for example, the filter 6 having the plurality of openings P formed therein may be imaged using a camera or the like, and the size of the openings P may be acquired through image analysis or the like, or the size of the openings P may be acquired on the basis of the far-field pattern of the first light flux L1 (or the second light flux L2) having passed through the plurality of openings P. In a case where the spatial light modulator 8 is used in the light splitting unit 4 as in the present embodiment, the size of the openings P formed in the base material 15 can be calculated in advance using the hologram pattern, but it is possible to determine whether the amount of deviation of the size of the plurality of openings P from the set value exceeds a threshold by comparing the calculation result with an image of the actual opening P, or the like.

The re-adjustment step S06 is a step of re-adjusting the size of the plurality of openings. The re-adjustment step S06 is performed in a case where it is determined in the discrimination step S05 that the amount of deviation of the size of the plurality of openings P from the set value exceeds a threshold, and is skipped in a case where it is determined in the discrimination step S05 that the amount of deviation of the size of the plurality of openings P from the set value is equal to or less than the threshold. Meanwhile, here, in a case where the size of the plurality of openings P formed in the manufacturing step S04 is smaller than the set value by exceeding the threshold, the re-adjustment step S06 is performed to bring the size of the plurality of openings P closer to the set value. In a case where the size of the plurality of openings P formed in the manufacturing step S04 is greater than the set value by exceeding the threshold, a new region R of the base material 15 is located at the focusing position F of the imaging optical system 5, and the manufacturing step S04 is performed again.

In the re-adjustment step S06, the base material 15 is re-irradiated with the first light flux L1 by changing conditions such as the intensity, position, and beam shape of the first light flux L1 from conditions in the initial irradiation. Specifically, after the hologram pattern presented by the spatial light modulator 8 is changed, the base material 15 may be re-irradiated with the plurality of first light fluxes L1. In addition, after the position of the base material 15 is changed back and forth along the optical axis of the plurality of first light fluxes L1, the base material 15 may be re-irradiated with the plurality of first light fluxes L1.

After the re-adjustment step S06 is performed, the discrimination step S05 and the re-adjustment step S06 may be executed again, or the re-execution of the discrimination step S05 and the re-adjustment step S06 may be omitted and the process may proceed to the generation step S07.

The generation step S07 is a step of generating the interference light Ls using the filter 6 having a plurality of openings P formed therein. In the generation step S07, each of the plurality of openings P of the filter 6 manufactured in the above step is held in a state where it is maintained on the optical axis of the plurality of first light fluxes L1 corresponding to the plurality of openings P. The control unit 7 controls the light source 3 and the light splitting unit 4, and controls the wavefront of the second laser beam LB using the hologram pattern presented by the spatial light modulator 8, to thereby split the second laser beam LB output from the light source 3 into the plurality of second light fluxes L2 having the same optical axis as the plurality of first light fluxes L1. The plurality of second light fluxes L2 having passed through each of the plurality of openings P are caused to interfere with each other at the target position 2, to thereby generate the interference light Ls at the target position 2.

In the generation step S07, from the viewpoint of eliminating the need for precise alignment between the second laser beam LB (the plurality of second light fluxes L2) and the opening P, the laser beam is switched from the plurality of first light fluxes L1 to the plurality of second light fluxes L2 while maintaining each of the plurality of openings P of the filter 6 on the optical axis of the plurality of first light fluxes L1 corresponding to the plurality of openings P. However, as mentioned in the description of the above manufacturing step S04, in a case where the base material 15 is moved back and forth in the optical axis direction of the plurality of first light fluxes L1 from the focusing position F for the purpose of enlarging the size of the opening P, the filter 6 may be moved in the optical axis direction and returned to the focusing position F.

The processing step S08 is a step of processing the object S. In the processing step S08, the object S placed at the target position 2 is irradiated with the interference light Ls, and the surface of the object S is processed. In the processing step S08, the object S placed at the target position 2 may be held by a holding portion (not shown) which is movable within a plane orthogonal to the optical axis of the plurality of second light fluxes L2. By scanning the interference light Ls at any position on the surface of the object S using the holding portion, a desired region on the surface can be easily processed.

As described above, in the present embodiment, the filter 6 is manufactured by splitting the first laser beam LA into the plurality of first light fluxes L1, and irradiating the base material 15 with these the first light fluxes L1 to form a plurality of openings P. This allows the plurality of openings P to be formed in the base material 15 using a single optical system for the first laser beam LA, which makes it possible to form a desired pattern of the interference light Ls accurately and with a high degree of freedom. In addition, in the present embodiment, the interference light Ls is generated by splitting the second laser beam LB into the plurality of second light fluxes L2 having the same optical axis as the plurality of first light fluxes L1, and causing the plurality of second light fluxes L2 having passed through each of the plurality of openings P to interfere with each other. That is, in this method, when the interference light Ls is generated, the filter 6 for generating interference light is manufactured on the spot, and after the filter 6 is manufactured, the plurality of second light fluxes L2 can be passed directly through the plurality of openings P. Therefore, even in a case where the pattern of the interference light Ls to be generated is changed, precise alignment between the laser beam L (the second light flux L2) and the opening P is not required.

In the present embodiment, the hologram pattern presented by the spatial light modulator 8 is used to split the first laser beam LA into the plurality of first light fluxes L1 and to split the second laser beam LB into the plurality of second light fluxes L2. In this way, by using the hologram pattern presented by the spatial light modulator 8, it is possible to easily generate the first light flux L1 and the second light flux L2 according to a desired pattern of the interference light Ls (control the wavefronts of the first laser beam LA and the second laser beam LB). In the light splitting using the spatial light modulator 8, a change in the polarization direction of the split light flux or the like can be suppressed more than the light splitting using a diffractive optical element or the like. In addition, the split light flux can be modulated at the level of each pixel of the spatial light modulator 8.

In the present embodiment, an aspect can be adopted in which a phase pattern for enlarging the size of the plurality of openings P is superimposed on the hologram pattern. In this case, it is possible to easily form an opening P of an appropriate size that does not cause interference with the plurality of second light fluxes L2 used to generate the interference light Ls.

In the present embodiment, an aspect can be adopted in which the bright spot positions Bₙ and Bₙ₊₁ of the n-th-order diffracted light and the (n+1)-th-order diffracted light of the plurality of first light fluxes L1 on the base material 15 are calculated on the basis of the hologram pattern, and the size of the opening P corresponding to the n-th-order diffracted light is determined so as to reach any position between the bright spot positions Bₙ and Bₙ₊₁ of the n-th-order diffracted light and the (n+1)-th-order diffracted light.

In addition, in the present embodiment, an aspect can be adopted in which the bright spot positions Bₙ and Bₙ₊₁ and intensities of the n-th-order diffracted light and the (n+1)-th-order diffracted light of the plurality of first light fluxes L1 on the base material 15 are calculated on the basis of the hologram pattern, and the size of the opening P corresponding to the n-th-order diffracted light is determined so that the ratio of the distance from the bright spot position Bₙ of the n-th-order diffracted light to the edge of the opening P and the distance from the edge of the opening P to the bright spot position Bₙ₊₁ of the (n+1)-th-order diffracted light is the ratio of the intensity of the n-th-order diffracted light to the intensity of the (n+1)-th-order diffracted light. According to these aspects, the size of the opening P corresponding to the n-th-order diffracted light can be appropriately determined.

In the present embodiment, the intensity of the first laser beam LA required to form the plurality of openings P in the base material 15 is calculated. By calculating the intensity of the first laser beam LA on the basis of the material of the base material 15, or the like, it is possible to form the opening P using the first light flux L1 with an appropriate intensity.

In the present embodiment, the intensity of the first laser beam LA (intensity of the plurality of first light fluxes L1) used to manufacture the filter 6 is made greater than the intensity of the second laser beam LB (intensity of the plurality of second light fluxes L2) used to generate the interference light Ls. This makes it possible to suitably form an opening P of an appropriate size in the base material 15, and to prevent the second light flux L2 from interfering with the opening P when the interference light Ls is generated.

In the present embodiment, the plurality of openings P are formed using only the plurality of first light fluxes L1. Only the first light flux L1 contributes to the formation of the opening P, so that when the interference light Ls is generated, excess light fluxes that do not contribute to the generation of the interference light Ls can be prevented from passing through the opening P.

In the present embodiment, each of the plurality of openings P is formed to have a circular cross-section. This makes it possible to reduce noise of the generated interference light Ls more than in a case where each of the plurality of openings P has another shape such as a rectangular shape. Meanwhile, for example, in a case where a resin such as a thermosetting resin or an ultraviolet-curing resin is used as a constituent material of the base material 15, the plurality of openings P using the first light flux L1 may be formed, and then the base material 15 separately from the first light flux L1 may be irradiated with near-infrared light or ultraviolet light for curing the resin.

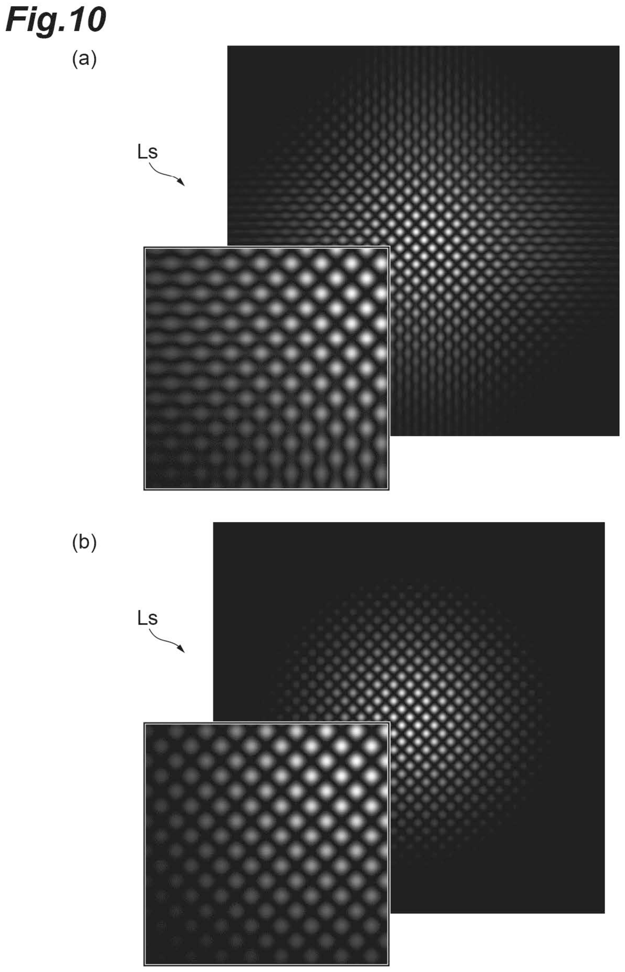

FIG. 10(a) is a diagram illustrating an example of the pattern of interference light in a case where an opening having an elliptical cross section is used. As shown in the drawing, it can be understood that in a case where an opening having an elliptical cross section is used, the pattern of interference light is distorted in such a way that it extends outward in a region farther from the center. Such distortion of the pattern of interference light is considered to be caused by the fact that light to be originally cut off by the filter tends to pass through in the direction of the major axis of the ellipse.

On the other hand, FIG. 10(b) is a diagram illustrating an example of the pattern of interference light in a case where an opening having a circular cross section is used. As shown in the drawing, it can be understood that in a case where an opening having a circular cross section is used, the pattern of interference light is maintained in a constant shape over the entire region. Therefore, it can be understood that in a case where an opening having a circular cross section is used, it is possible to reduce noise of the interference light Ls, and to generate the interference light Ls in a higher-accuracy pattern.

In the present embodiment, in a case where it is determined that the amount of deviation of the size of the manufactured plurality of openings P from the set value exceeds a threshold, the size of the plurality of openings P is re-adjusted. By the size of the opening P being appropriately re-adjusted, it is possible to more reliably prevent the second light flux L2 from interfering with the opening P when the interference light Ls is generated, and to accurately form a desired pattern of the interference light Ls.

In the present embodiment, an aspect can be adopted in which, when the size of the opening P is re-adjusted, the hologram pattern is changed, and then the base material 15 is re-irradiated with the plurality of first light fluxes L1. In this case, the re-adjustment of the size of the opening P does not require movement of the base material 15 or the like, and thus the size of the opening P can be easily re-adjusted.

In addition, in the present embodiment, an aspect can be adopted in which, when the size of the opening P is re-adjusted, the position of the base material 15 is changed along the optical axis of the plurality of first light fluxes L1, and then the base material 15 is re-irradiated with the plurality of first light fluxes L1. In this case, since no time is required for switching the hologram pattern, the size of the opening P can be easily re-adjusted in a short time.

In the present embodiment, the filter 6 is manufactured by feeding out one region R of the long base material 15 onto the optical axis of the plurality of first light fluxes L1. According to such a method, by shifting the placement region of the long base material 15 with respect to the optical axis of the first light flux L1, it is possible to place a new region (a region without the opening P) of the base material 15 with respect to the plurality of first light fluxes L1 without changing the position of the base material 15 relative to the optical axis direction of the first light fluxes L1. Therefore, when the pattern of the interference light Ls is changed, the filter 6 can be easily generated on the spot.

In the present embodiment, the object S is irradiated with the generated interference light Ls to process the object S. This makes it possible to suitably process the object S using the interference light Ls having a high-accuracy pattern.

The present disclosure is not limited to the above embodiment. For example, in the above embodiment, the size of the opening P is made larger than the beam diameter of the first light flux L1 by superimposing a tilt component or a defocus component on the first light flux L1, or by making the intensity of the first light flux L1 larger than the intensity of the second light flux L2. However, the size of the opening P may be larger than the beam diameter of the first light flux L1 by setting the wavelength of the first light flux L1 to a wavelength having greater energy absorption in the base material 15 than the second light flux L2, or by making the pulse width of the first light flux L1 larger than the pulse width of the second light flux L2, to thereby increase the amount of energy input to the base material 15. Meanwhile, the first laser beam LA constituting the first light flux L1 and the second laser beam LB constituting the second light flux L2 may have the same parameter. In this case, the manufacturing step S04 and the generation step S07 can be continuously performed without changing the parameters (intensity, pulse width, wavelength beam diameter, and the like) of the laser beam L from the light source 3.

In addition, in the above embodiment, the filter 6 is manufactured by feeding out one region R of the long base material 15 onto the optical axis of the plurality of first light fluxes L1. However, an aspect may be adopted in which, instead of the long base material 15, one region of a large-area base material is located on the optical axis of the plurality of first light fluxes L1, and the base material is moved in an in-plane direction whenever the filter 6 is manufactured to place a new region on the optical axis of the plurality of first light fluxes L1. In addition, an aspect may be adopted in which one region of a circular base material is located on the optical axis of the plurality of first light fluxes L1, and whenever the filter 6 is manufactured, the base material is rotated around its center to locate a new region on the optical axis of the plurality of first light fluxes L1.

### Reference Signs List

1 Interference light generation device
3 Light source
4 Light splitting unit
6 Filter
8 Spatial light modulator (light splitting unit)
11A, 11B Hologram pattern
15 Base material
R One region
LA First laser beam
LB Second laser beam
L1 First light flux
L2 Second light flux
Bₙ, Bₙ₊₁ Bright spot position
Ls(Ls1, Ls2) Interference light
P Opening
S Object

## Claims

1. An interference light generation method comprising:
a placement step of placing a base material for filter formation in an optical path of a first laser beam;
a manufacturing step of manufacturing a filter by splitting the first laser beam into a plurality of first light fluxes and irradiating the base material with the plurality of first light fluxes to form a plurality of openings corresponding to irradiation positions of the plurality of first light fluxes in the base material; and
a generation step of generating interference light by splitting a second laser beam into a plurality of second light fluxes having the same optical axis as the plurality of first light fluxes while each of the plurality of openings of the filter is maintained on the optical axis of the plurality of first light fluxes corresponding to the plurality of openings, and causing the plurality of second light fluxes having passed through each of the plurality of openings to interfere with each other.

2. The interference light generation method according to claim 1, wherein the manufacturing step includes using a hologram pattern presented by a spatial light modulator to split the first laser beam into the plurality of first light fluxes and to split the second laser beam into the plurality of second light fluxes.

3. The interference light generation method according to claim 2, wherein the manufacturing step includes superimposing a phase pattern for enlarging a size of the plurality of openings on the hologram pattern.

4. The interference light generation method according to claim 2 or 3, further comprising a determination step of calculating bright spot positions of n-th-order diffracted light and (n+1)-th-order diffracted light of the plurality of first light fluxes on the base material on the basis of the hologram pattern, and determining a size of an opening corresponding to the n-th-order diffracted light so as to reach any position between the bright spot positions of the n-th-order diffracted light and the (n+1)-th-order diffracted light.

5. The interference light generation method according to claim 2 or 3, further comprising a determination step of calculating bright spot positions and intensities of n-th-order diffracted light and (n+1)-th-order diffracted light of the plurality of first light fluxes on the base material on the basis of the hologram pattern, and determining a size of an opening corresponding to the n-th-order diffracted light so that a ratio of a distance from the bright spot position of the n-th-order diffracted light to an edge of the opening to a distance from the edge of the opening to the bright spot position of the (n+1)-th-order diffracted light is a ratio of the intensity of the n-th-order diffracted light to the intensity of the (n+1)-th-order diffracted light.

6. The interference light generation method according to any one of claims 1 to 5, further comprising a calculation step of calculating an intensity of the first laser beam required to form the plurality of openings in the base material.

7. The interference light generation method according to any one of claims 1 to 6, wherein an intensity of the first laser beam in the manufacturing step is greater than an intensity of the second laser beam in the generation step.

8. The interference light generation method according to any one of claims 1 to 7, wherein the manufacturing step includes forming the plurality of openings using only the plurality of first light fluxes.

9. The interference light generation method according to any one of claims 1 to 8, wherein the manufacturing step includes forming each of the plurality of openings to have a circular cross-section.

10. The interference light generation method according to any one of claims 1 to 9, further comprising:
a discrimination step of determining whether an amount of deviation of a size of the plurality of openings manufactured in the manufacturing step from a set value exceeds a threshold; and
a re-adjustment step of re-adjusting the size of the plurality of openings in a case where it is determined in the discrimination step that the amount of deviation of the size of the plurality of openings from the set value exceeds the threshold.

11. The interference light generation method according to claim 10, wherein the manufacturing step includes using a hologram pattern presented by a spatial light modulator to split the first laser beam into the plurality of first light fluxes and to split the second laser beam into the plurality of second light fluxes, and
the re-adjustment step includes changing the hologram pattern and then re-irradiating the base material with the plurality of first light fluxes.

12. The interference light generation method according to claim 10, wherein the re-adjustment step includes changing a position of the base material along the optical axis of the plurality of first light fluxes, and then re-irradiating the base material with the plurality of first light fluxes.

13. The interference light generation method according to any one of claims 1 to 12, wherein the placement step includes feeding out one region of a long base material onto the optical axis of the plurality of first light fluxes.

14. The interference light generation method according to any one of claims 1 to 13, further comprising a processing step of irradiating an object with the interference light generated in the generation step to process the object.

15. An interference light generation device comprising:
a light source configured to output a first laser beam and a second laser beam;
a base material for filter formation placed in an optical path of the first laser beam;
a light splitting unit configured to split the first laser beam into a plurality of first light fluxes and to split the second laser beam into a plurality of second light fluxes; and
a control unit configured to control an operation of the light source,
wherein the control unit
manufactures a filter by irradiating the base material with the plurality of first light fluxes to form a plurality of openings corresponding to irradiation positions of the plurality of first light fluxes in the base material, and
generates interference light by splitting the second laser beam into the plurality of second light fluxes having the same optical axis as the plurality of first light fluxes while each of the plurality of openings of the filter is maintained on the optical axis of the plurality of first light fluxes corresponding to the plurality of openings, and causing the plurality of second light fluxes having passed through each of the plurality of openings to interfere with each other.
